# DEMANDE DE BREVET EUROPEEN

(11) **EP 3 932 873 A1**
(43) Date de publication de la demande: **05.01.2022**
(21) Numéro de dépôt: 21182830.6
(22) Date de dépôt: 30.06.2021
(51) Int. Cl.: C02F 1/00, C02F 11/00, F04B 9/123

(54) **DISPOSITIF D'INJECTION SOUS HAUTE PRESSION D'UN EFFLUENT**

(30) Priorité: 02.07.2020 FR 2006975
(71) Demandeur: Commissariat à l'énergie atomique et aux énergies alternatives, 75015 Paris (FR)
(72) Inventeur: CHATAING, Thierry, 38054 GRENOBLE CEDEX 09 (FR)
(74) Mandataire: Brevalex

(57) **Abrégé**

L'invention concerne un dispositif d'injection (10) adapté pour injecter un effluent dans un réacteur (11), le dispositif comprenant :
- un réservoir (101) comprenant une extrémité haute (101a) et une extrémité basse (101b), et pourvu d'un piston mobile (101c), et séparant le volume de l'au moins un réservoir (101) en deux sections de volume variable ;
- un moyen de remplissage (200) agencé pour remplir en effluent le réservoir (101) par son extrémité basse (101b) ;
- un moyen de compression (300) agencé pour injecter un fluide de compression, dans le réservoir (101) par son extrémité haute (101a) et de manière à compresser, par l'intermédiaire du piston mobile (101c), l'effluent présent dans le réservoir (101) ;
- un moyen d'injection (400), dans le réacteur (11), de l'effluent présent dans le réservoir (101), et compressé par le fluide de compression.

## Description

### DOMAINE TECHNIQUE

L'invention se rapporte au domaine du retraitement des effluents, par exemple des effluents organiques tels que les boues de stations d'épurations, les déchets, les micro-algues, la liqueur noire issue de papeterie, ou encore les digestats.

En particulier, la présente invention concerne un dispositif et un procédé destinés à injecter un effluent à haute pression, par exemple à une pression supérieure à 100 bars, voire 250 bars, en vue de son traitement dans un réacteur.

### ÉTAT DE LA TECHNIQUE ANTÉRIEURE

La liquéfaction hydrothermale, la carbonisation hydrothermale, ainsi que la gazéification en eau supercritique sont autant de procédés pour la conversion et/ou la valorisation d'effluents carbonés, et plus particulièrement de biomasse.

A titre d'exemple, la gazéification en eau supercritique permet de retraiter de la biomasse humide, comprenant par exemple plus de 70 % d'eau, et comprise dans des effluents tels que les boues de stations d'épurations, les déchets, les micro-algues, la liqueur noire issue de papeterie, ou encore les co-digestats.... En particulier, le traitement de ces matières carbonées par gazéification en eau supercritique permet de convertir ces dernières en un mélange gazeux, appelé « syngaz », qui comprend en particulier les espèces gazeuses suivantes : CH₄, H₂, CO₂, CO.

Aussi, ces trois procédés requièrent une injection de l'effluent carboné dans un réacteur, en vue de sa conversion, à une pression supérieure à 100 bars, voire 250 bars, et préférentiellement supérieure à 300 bars.

Toutefois, parmi les effluents d'intérêt, certains, et notamment les co-digestats, présentent un comportement non Newtonien. En particulier, la viscosité de ce type d'effluent présente une forte variabilité en fonction de la pression qui lui est appliquée, et peut à cet égard varier entre 110 cPoise et 87000 cPoise.

Ainsi, les pompes à piston, bien que largement mises en œuvre dans les domaines du bâtiment ou du pétrole tel que décrit dans les documents [1], [2] et [3] cités à la fin de la description, ne répondent pas aux exigences inhérentes à la conversion de ces effluents carbonés notamment par gazéification en eau supercritique.

En particulier, ces pompes ne permettent pas d'injecter des effluents, et notamment des co-digestats, à des pressions supérieures à 200 bars.

Par ailleurs, les co-digestats, en plus de leur comportement non-Newtonien sont sujets à une désorption d'eau lorsqu'ils sont comprimés par ce type de pompe.

De manière alternative, des solutions de convoyage/transfert, décrites dans les documents [4] et [5] cités à la fin de la description, ont pu être proposées. Toutefois, à l'instar des pompes à piston, ces solutions ne permettent pas d'atteindre les pressions d'injection requises.

D'autres dispositifs de pressurisation et d'injection ont été développés pour l'injection à haute pression de fluides tels que l'eau et l'huile. Parmi ces dispositifs figurent les pompes à engrenages, les pompes à membrane, ou encore les pompes à clapets ou à bille LEWA. Ces dispositifs sont utilisés à l'échelle industrielle pour la gazéification en eau supercritique avec injection d'oxygène pour la destruction de produits chimiques liquides.

Cependant, ces dispositifs ne permettent pas un dosage fin et optimisé d'un effluent, tel qu'un co-digestat, injecté dans le réacteur en vue de sa conversion. Notamment, ces dispositifs de pressurisation mettent en œuvre une dilution du co-digestat qui est consommatrice de grandes quantités d'eau difficilement recyclable.

Par surcroit, les co-digestats comprennent une large proportion de matières solides, notamment des particules abrasives qui sont susceptibles d'endommager les dispositifs de pressurisation, et ainsi entraîner de longues périodes de maintenance.

Un but de la présente invention est donc de proposer un dispositif d'injection permettant l'injection d'un effluent, par exemple chargé en matière carbonée, dans un réacteur à une pression par exemple supérieure à 100 bars, voire supérieure à 250 bars.

Un autre but de la présente invention est de proposer un dispositif d'injection de l'effluent plus robuste, et permettant de limiter toute défaillance susceptible d'intervenir en présence de matière solide.

Un autre but de la présente invention est de proposer un dispositif d'injection de l'effluent qui permet un dosage précis de ce dernier en vue de son injection dans un réacteur, et plus particulièrement de gazéification en eau supercritique ou de liquéfaction hydrothermale ou de carbonisation hydrothermale.

Un autre but de la présente invention est de proposer un dispositif d'injection de l'effluent permettant de limiter la consommation d'eau.

### EXPOSÉ DE L'INVENTION

Les buts de la présente invention sont, au moins en partie, atteints par un dispositif d'injection adapté pour injecter sous haute pression un effluent dans un réacteur, le dispositif comprenant :
- au moins un réservoir de forme tubulaire comprenant une extrémité haute et une extrémité basse, et pourvu d'un piston mobile entre les extrémités haute et basse, et séparant le volume de l'au moins un réservoir en deux sections de volume variable ;
- un moyen de remplissage agencé pour remplir en effluent l'au moins un réservoir par son extrémité basse ;
- un moyen de compression agencé pour injecter, sous pression, un fluide, dit fluide de compression, dans l'au moins un réservoir par son extrémité haute et de manière à compresser, par l'intermédiaire du piston mobile, l'effluent susceptible d'être présent dans l'au moins un réservoir ;
- un moyen d'injection, dans le réacteur, de l'effluent susceptible d'être présent dans l'au moins un réservoir, et compressé par le fluide de compression.

Selon un mode de mise en œuvre, la forme du piston mobile comprend une section de forme cylindrique d'une longueur au moins deux fois supérieure à son diamètre.

Selon un mode de mise en œuvre, ledit dispositif d'injection comprend des moyens de détection de fin de remplissage et/ou de fin d'injection de l'effluent.

Selon un mode de mise en œuvre, les moyens de détection sont adaptés pour détecter la présence du piston mobile en deux positions de détection de l'au moins un réservoir, lesdites positions étant associées à, respectivement, une fin de remplissage et une fin d'injection de l'effluent.

Selon un mode de mise en œuvre, le piston mobile présente une aimantation permanente adaptée à sa détection en l'une ou l'autre des deux positions de détection.

Selon un mode de mise en œuvre, le moyen de remplissage comprend une pompe de remplissage et un conduit de remplissage, associé à une vanne de remplissage, et propre à l'au moins un réservoir considéré.

Selon un mode de mise en œuvre, ledit dispositif comprend en outre un premier conduit de rinçage en amont de la vanne de remplissage, et agencé pour imposer une circulation d'un fluide de rinçage, notamment de l'eau, dans la vanne de remplissage.

Selon un mode de mise en œuvre, le moyen d'injection comprend un conduit d'injection, associé à une vanne d'injection, destinée à relier fluidiquement l'extrémité basse au réacteur.

Selon un mode de mise en œuvre, ledit dispositif comprend en outre un deuxième conduit de rinçage, connectant fluidiquement le moyen de compression et le conduit d'injection, en amont de la vanne d'injection, et agencé pour imposer une circulation du fluide de compression dans la vanne d'injection.

Selon un mode de mise en œuvre, le moyen de compression comprend une pompe de compression et un conduit de compression, associé à une vanne d'arrêt, et propre à l'au moins un réservoir considéré.

Selon un mode de mise en œuvre, ledit dispositif comprend en outre un moyen de recyclage du fluide de compression injectée sous pression dans l'au moins un réservoir, et pourvu d'un conduit de recyclage destiné à prélever ledit fluide de compression au niveau de l'extrémité haute de l'au moins un réservoir.

Selon un mode de mise en œuvre, le conduit de recyclage est agencé pour imposer une recirculation du fluide de compression dans le moyen de compression.

Selon un mode de mise en œuvre, le moyen de recyclage comprend une vanne de recyclage permettant de prélever le fluide de compression sélectivement dans l'au moins un réservoir.

Selon un mode de mise en œuvre, le moyen de compression est agencé pour prélever le fluide de compression stocké dans le réservoir tampon en vue de l'injecter sous pression dans l'au moins un réservoir.

Selon un mode de mise en œuvre, l'au moins un réservoir forme un tube de longueur L et de diamètre D, et de sorte que le rapport de la longueur L sur le diamètre D est supérieur à 30.

Selon un mode de mise en œuvre, le diamètre D est inférieur à 500 mm voire inférieur à 250 mm.

Selon un mode de mise en œuvre, l'au moins un réservoir forme un hélicoïde, avantageusement à spires jointives.

Selon un mode de mise en œuvre, l'au moins un réservoir comprend deux réservoirs, le moyen de remplissage est agencé pour remplir en effluent sélectivement l'un et l'autre des deux réservoirs, le moyen de compression est agencé pour compresser sélectivement l'effluent susceptible d'être présent dans l'un et l'autre des deux réservoirs, et le moyen d'injection est agencé pour injecter dans le réacteur sélectivement l'effluent susceptible d'être présent dans l'un et l'autre des deux réservoirs, et compressé par le fluide de compression injectée.

L'invention concerne également une installation de conversion d'un effluent comprenant de la matière organique qui comprend :
- un réacteur de conversion de l'effluent ;
- le dispositif d'injection selon la présente invention.

Selon un mode de mise en œuvre, le réacteur est choisi parmi, ou comprend au moins un des réacteurs choisi parmi : un réacteur de gazéification en eau supercritique, un réacteur de liquéfaction hydrothermale, un réacteur de carbonisation hydrothermale.

L'invention concerne également un procédé d'injection d'un effluent à haute pression dans un réacteur mettant en œuvre le dispositif d'injection selon la présente invention,
le procédé comprenant des cycles de remplissage/injection exécutés de manière à injecter dans le réacteur, et à partir des réservoirs, l'effluent de manière essentiellement continue et à haute pression,
chaque cycle de remplissage/injection comprenant une phase de remplissage en effluent de l'un ou l'autre des réservoirs, suivie d'une phase d'injection, dans le réacteur, dudit effluent soumis à la haute pression imposée par du fluide de compression injectée par le moyen de compression.

Selon un mode de mise en œuvre, lors de la phase de remplissage d'un des réservoirs, le fluide de compression susceptible d'être présent dans ce dernier est évacué.

Selon un mode de mise en œuvre, le fluide de compression évacué lors de la phase de remplissage est réinjectée dans le moyen de compression.

Selon un mode de mise en œuvre, la phase d'injection comprend la compression de l'effluent injecté lors de la phase de remplissage par le fluide de compression injecté par le moyen de compression, à une pression supérieure à 100 bars, voire supérieure à 250 bars, et l'injection de l'effluent dans le réacteur via le moyen d'injection.

Selon un mode de mise en œuvre, dès lors qu'un des réservoirs est en phase de remplissage, l'autre est en phase d'injection.

### BRÈVE DESCRIPTION DES DESSINS

D'autres caractéristiques et avantages apparaîtront dans la description qui va suivre d'un dispositif d'injection d'un effluent dans un réacteur selon l'invention, donnés à titre d'exemples non limitatifs, en référence aux dessins annexés dans lesquels :
La figure 1 est une représentation schématique d'un dispositif d'injection d'un effluent à haute pression selon un premier exemple de réalisation de la présente invention ;
La figure 2 est une représentation schématique du réservoir de la figure 1, et illustrant les moyens de détection de fin de remplissage et de fin d'injection ;
La figure 3 est une représentation schématique d'un réservoir formant un hélicoïde et susceptible d'être mis en œuvre dans le cadre d'une variante du premier exemple de réalisation de la présente invention ;
La figure 4 est une représentation schématique d'un dispositif d'injection d'un effluent à haute pression selon un deuxième exemple de réalisation de la présente invention ;
La figure 5 est une représentation schématique du premier réservoir mis en œuvre dans le cadre du deuxième exemple de réalisation de la présente invention ;
La figure 6 est une représentation schématique du deuxième réservoir mis en œuvre dans le cadre du deuxième exemple de réalisation de la présente invention ;
La figure 7 est une représentation schématique de la mise en œuvre du procédé d'injection selon la présente invention, en particulier, la figure 7 représente la phase de remplissage du premier réservoir et la phase d'injection de l'effluent dans le réacteur, présent dans le deuxième réservoir ;
La figure 8 est une représentation schématique de la mise en œuvre du procédé d'injection selon la présente invention, en particulier, la figure 8 représente la phase de remplissage du deuxième réservoir et la phase d'injection de l'effluent dans le réacteur, présent dans le premier réservoir;

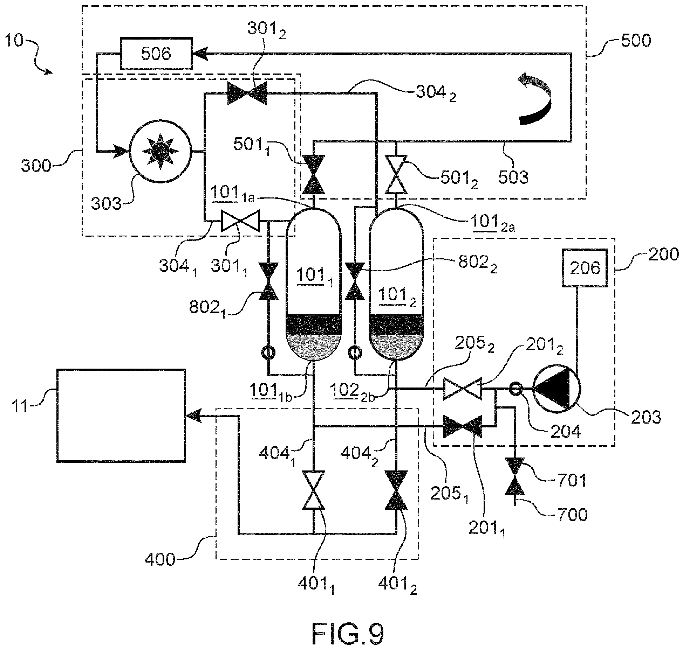

La figure 9 représente la phase d'injection, vers le réacteur, de l'effluent présent dans le premier réservoir.

### EXPOSÉ DÉTAILLÉ DE MODES DE RÉALISATION PARTICULIERS

Par souci de clarté, seuls les éléments qui sont utiles à la compréhension des modes de réalisation de l'invention ont été représentés et sont détaillés. En particulier, la mise en œuvre de la conversion d'un effluent carboné n'est pas détaillée. Plus particulièrement, la gazéification en eau supercritique, la liquéfaction hydrothermale et la carbonisation hydrothermale ne sont pas détaillées.

Par ailleurs, les termes « amont » et « aval », employés dans le cadre de la présente demande, sont relatifs à un sens d'écoulement d'un fluide dans un conduit ou une vanne.

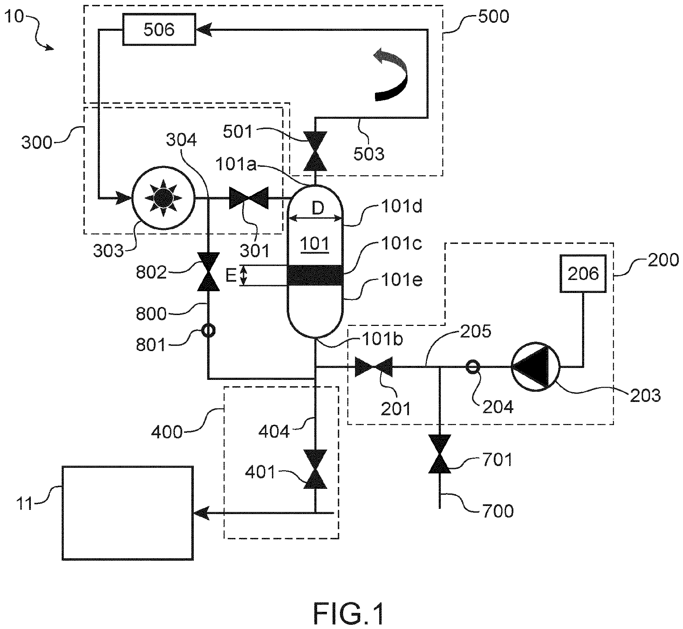

Sur la figure 1, on peut voir un premier exemple de réalisation d'un dispositif d'injection 10 adapté pour l'injection à haute pression d'un effluent dans un réacteur 11.

Le réacteur 11 peut à cet égard comprendre un réacteur de gazéification en eau supercritique, un réacteur de liquéfaction hydrothermale, un réacteur de carbonisation hydrothermale. L'invention n'est toutefois pas limitée à ces seuls aspects

L'effluent peut comprendre de la matière organique, par exemple un digestat ou un « co-digestat ».

Notamment, l'effluent peut comprendre des déchets issus de l'agriculture.

Par « co-digestat », on entend un mélange de digestat et de boue de station d'épuration.

Par « digestat », on entend un résidu du processus de méthanisation de matières organiques naturelles ou de produits résiduaires organiques.

En d'autres termes, un co-digestat est un mélange humide (contenant de l'eau) de matière organique et de matière solide, et plus particulièrement de matière solide minérale.

L'effluent peut comprendre des particules solides en suspension dans un liquide, par exemple de l'eau.

L'effluent peut également présenter un comportement non-newtonien.

Par « haute pression », on entend une pression par exemple supérieure 100 bars, voire supérieure à 250 bars.

L'effluent selon les termes de la présente invention peut présenter un Pouvoir Calorifique Supérieur (ou « PCS ») inférieure à 12 Mégajoules / kilogramme.

Le dispositif d'injection 10 comprend au moins un réservoir. Le dispositif d'injection selon ce premier exemple de réalisation est limité à un unique réservoir 101.

Le réservoir 101 présente une forme tubulaire et s'étend entre une extrémité haute 101a et une extrémité basse 101b.

Il est entendu, selon la présente invention, que le tube ne présente pas nécessairement une forme rectiligne et peut comprendre des sections circulaires, par exemple pour former un hélicoïde, ou comprendre des sections coudées reliant entre elles des sections droites. En d'autres termes, l'expression « s'étend entre une extrémité haute 101a et une extrémité basse 101b » ne doit en aucune manière être limitée à une extension linéaire du tube formant le réservoir.

Le réservoir 101 peut former un tube de longueur L et de diamètre D, et de sorte que le rapport de la longueur L sur le diamètre interne D est supérieur à 30. Par exemple, le diamètre interne D est inférieur à 500 mm voire inférieur à 250 mm. Le réservoir 101 peut par ailleurs comprendre l'inox 316L.

Toujours à titre d'exemple, la paroi du réservoir peut présenter une épaisseur comprise entre 5 mm et 15 mm, notamment 7,11 mm. Par ailleurs, la longueur L d'un réservoir peut être comprise entre 3 m et 15 m, notamment être égale à 4 m.

Le dispositif d'injection 10 est également pourvu d'un piston mobile 101c disposé dans le réservoir 101. En particulier, le piston mobile 101c sépare le volume du réservoir 101 en deux sections dites, respectivement, section haute 101d et section basse 101e. La section haute 101d s'étend dans le tube formant le réservoir 101 de l'extrémité haute 101a vers le piston mobile 101c, tandis que la section basse 101e s'étend du piston mobile 101c vers l'extrémité basse 101b. Le volume de chacune de ces deux sections 101d et 101e est susceptible de varier lors du déplacement du piston mobile 101c le long du réservoir 101 (par exemple sous l'effet d'une différence de pression entre l'une et l'autre de la section haute 101d et de la section basse 101e).

Par « déplacement de long du réservoir », on entend un déplacement le long du tube formant le réservoir. Ce tube peut être droit ou enroulé autour d'un axe pour former un hélicoïde, par exemple à spires jointives.

Le piston mobile 101c est également associé à des moyens de guidage permettant de guider ledit piston mobile le long du réservoir 101. Les moyens de guidage peuvent par exemple imposer une forme particulière au piston mobile 101c. À cet égard, le piston mobile 101c peut comprendre une section principale de forme cylindrique dont le diamètre D1 est essentiellement égal au diamètre interne D d'une surface interne du réservoir 101. Par ailleurs, la longueur E (représenté sur la figure 1) de la section principale du piston mobile 101c est au moins deux fois supérieure au diamètre D. Ainsi, cet agencement permet d'éviter tout pivotement du piston mobile 101c lorsque ce dernier est guidé dans le réservoir 101.

Le dispositif d'injection 10 comprend également un moyen de remplissage 200 qui permet de remplir en effluent le réservoir 101 par son extrémité basse 101b. Plus particulièrement, lors d'une phase de remplissage du réservoir 101, l'effluent entre dans le réservoir 101 par l'extrémité basse 101b, et exerce une pression sur le piston mobile 101c. Cette pression provoque ainsi le déplacement, par guidage, du piston mobile 101c de l'extrémité basse 101b vers l'extrémité haute 101a de sorte que le volume de la section basse 101e augmente tandis que celui de la section haute 101d diminue. La phase de remplissage s'accompagne également d'une évacuation d'un fluide de compression (décrit ci-après) susceptible d'être présent dans la section haute 101d.

Le moyen de remplissage 200 peut comprendre une pompe de remplissage 203, destinée à prélever l'effluent dans un réservoir d'effluent 206.

La pompe de remplissage peut par exemple être une pompe de marque NOV et du type C23BC11RMA.

Le moyen de remplissage 200 peut également comprendre un conduit de remplissage 205 dans lequel l'effluent prélevé par la pompe de remplissage 203 est acheminé vers le réservoir 101.

En d'autres termes, le conduit de remplissage relie la pompe de remplissage 203 et l'extrémité basse 101b du réservoir 101.

Le moyen de remplissage 200 peut être commandé électroniquement par une unité de commande. L'unité de commande peut à cet égard comprendre un calculateur sur lequel est chargé un programme d'ordinateur.

Le conduit de remplissage 204 peut également être pourvu d'une vanne de remplissage 201. La vanne de remplissage 201 peut notamment comprendre une électrovanne.

Le dispositif d'injection 10 comprend également un moyen de compression 300. Le moyen de compression 300 peut notamment être agencé pour injecter, sous pression, un fluide, dit fluide de compression, dans le réservoir 101 par son extrémité haute 101a. Plus particulièrement, le moyen de compression 300 est agencé pour injecter sous pression le fluide de compression dans la section haute 101d de manière à compresser, par l'intermédiaire du piston mobile 101c, l'effluent susceptible d'être présent dans l'au moins un réservoir 101.

Le fluide de compression peut comprendre au moins un des fluides choisi parmi : eau, huile moteur, huile alimentaire, huile végétale ou tout autre type d'huile.

A l'instar du moyen de remplissage 200, le moyen de compression 300 peut également être commandé électroniquement par l'unité de commande.

Par ailleurs, le moyen de compression 300 peut comprendre une pompe de compression 303, ainsi qu'un conduit de compression 304 dans lequel le fluide de compression, sous haute pression, sortant de la pompe de compression 303 est acheminé vers le réservoir 101.

La pompe de compression 303 est par exemple une pompe doseuse à membrane associée à des clapets à bille de la marque LEWA.

En d'autres termes, le conduit de compression 304 relie la pompe de compression 303 et l'extrémité haute 101a du réservoir 101.

Le conduit de compression 304 est également pourvu d'une vanne d'arrêt 301, par exemple une électrovanne.

Le dispositif d'injection 10 comprend également un moyen d'injection 400.

En particulier, le moyen d'injection 400 est destiné à permettre l'injection, dans le réacteur 11, de l'effluent susceptible d'être présent dans le réservoir 101, et compressé par le fluide de compression.

À cet égard, le moyen d'injection 400 peut comprendre un conduit d'injection 404 dans lequel l'effluent sous haute pression sortant de l'extrémité basse 101b du réservoir 101 est acheminé vers le réacteur 11.

En d'autres termes, le conduit d'injection 404 relie le réacteur 11 à l'extrémité basse 101b du réservoir 101.

Le conduit d'injection 404 peut être pourvu d'une vanne d'injection 401, et plus particulièrement d'une électrovanne commandée par l'unité de commande.

Ainsi, lors d'une phase d'injection, la vanne d'injection 401 est ouverte de manière à autoriser l'écoulement de l'effluent du réservoir vers le réacteur 11. Au cours de cet écoulement, l'effluent est maintenu à haute pression par le moyen de compression 300. Plus particulièrement, la pression exercée par le fluide de compression sur le piston mobile 101c permet de déplacer, par guidage, ce dernier de l'extrémité haute 101a vers l'extrémité basse 101b de sorte que le volume de la section haute 101d augmente tandis que celui de la section basse 101e diminue.

Le dispositif d'injection 10 peut également comprendre un moyen de recyclage 500 du fluide de compression à haute pression dans le réservoir 101. Le moyen de recyclage 500 est notamment pourvu d'un conduit de recyclage 503 destiné à prélever le fluide de compression dans le réservoir 101 au niveau de son extrémité haute 101a.

Plus particulièrement, le moyen de recyclage 500 comprend une vanne de recyclage 501 permettant de prélever le fluide de compression du réservoir 101. La vanne de recyclage 501 peut comprendre une électrovanne commandée par l'unité de commande.

De manière avantageuse, le conduit de recyclage 503 peut être agencé pour imposer une recirculation du fluide de compression prélevé dans le moyen de compression 300.

Cet agencement permet ainsi de limiter la consommation de fluide de compression et son retraitement.

Selon un mode de réalisation avantageux, le moyen de recyclage comprend un réservoir tampon 506 destiné à stocker le fluide de compression prélevé dans le réservoir 101. Toujours selon ce mode de réalisation, le moyen de compression 300 est agencé pour prélever le fluide de compression stockée dans le réservoir tampon 506 en vue de l'injecter sous pression dans le réservoir 101.

La mise en œuvre du piston 101c mobile selon les termes de la présente invention permet d'établir une interface entre l'effluent et le fluide de compression et par voie de conséquence limiter toute contamination dudit fluide par l'effluent.

Par ailleurs, le réservoir 101 peut comprendre une section principale de forme généralement cylindrique et être terminé au niveau de l'extrémité haute 101a et de l'extrémité basse 101b par des sections hémisphériques. Ainsi, un piston mobile, également de forme cylindrique verra son déplacement, dans le réservoir 101, limité à la seule section principale dudit réservoir 101.

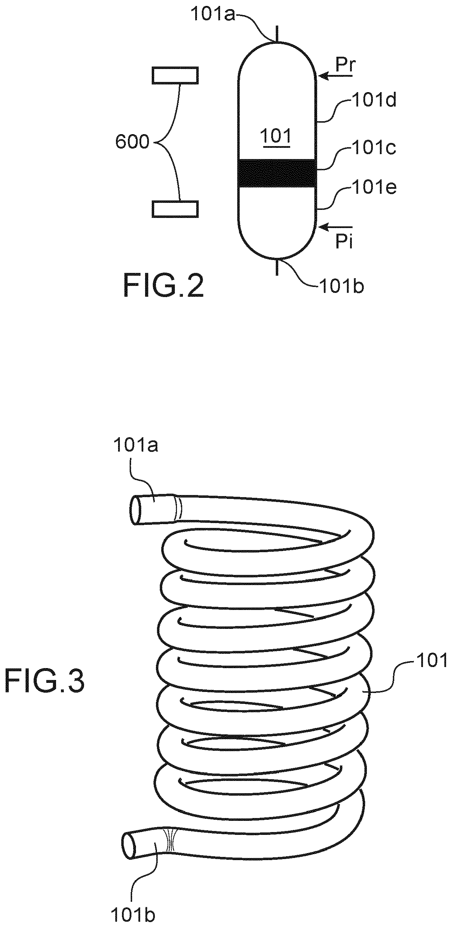

Le dispositif d'injection 10 peut également comprendre des moyens de détection 600 (figure 2) de fin de remplissage et/ou de fin d'injection de l'effluent.

Les moyens de détection 600 (figure 2) peuvent être commandés par l'unité de commande.

En particulier, et selon la présente invention, les moyens de détection 600 peuvent être agencée pour détecter la présence du piston mobile 101c en deux positions prédéterminées du réservoir 101 dites, respectivement, position de fin de remplissage Pr et position de fin d'injection Pi (figure 2). La position de fin de remplissage Pr est notamment une position adoptée par le piston mobile 101c lorsqu'un premier volume prédéterminé d'effluent est dans le réservoir 101c. En particulier, la position de fin de remplissage Pr peut être à proximité de l'extrémité haute 101a du réservoir 101. La position de fin d'injection Pi est une position adoptée par le piston mobile 101c lorsqu'un deuxième volume prédéterminé d'effluent a été injecté dans le réacteur 11. En particulier, la position de fin de remplissage peut être à proximité de l'extrémité basse 101b du réservoir 101.

Ainsi, le piston mobile 101c peut présenter une aimantation permanente de sorte que sa détection aux positions Pi et Pr soit mise en œuvre au moyen d'un ou plusieurs capteurs de champ magnétique (par exemple une sonde à effet Hall). En particulier, le piston mobile 101c peut comprendre un aimant enrobé d'un film de téflon ou de caoutchouc. De manière alternative, le piston mobile peut comprendre un palet en caoutchouc et dans lequel est inséré un aimant.

De manière alternative, la détection du piston mobile 101c peut impliquer des moyens de détection par ultrasons.

Le dispositif d'injection 10 comprend également un premier conduit de rinçage 700 connectant un réseau de fluide de rinçage (par exemple un réseau d'eau claire) et le conduit de remplissage 205, en amont de la vanne de remplissage 201. Notamment, ce premier conduit de rinçage 700 est adapté pour imposer une circulation du fluide de rinçage, par exemple de l'eau, dans la vanne de remplissage 201. La premier conduit 700 peut par ailleurs comprendre une vanne, dite première vanne de rinçage 701. Cette première vanne de rinçage 701 peut comprendre une électrovanne. Cette électrovanne est avantageusement pilotée par l'unité de commande. Par ailleurs, le conduit de remplissage 205 peut être pourvu d'un clapet anti-retour, dit premier clapet anti-retour 204 destiné à prévenir toute circulation du fluide de rinçage dans la pompe de remplissage 203.

De manière équivalente, le dispositif d'injection 10 peut également comprendre un deuxième conduit de rinçage 800 connectant fluidiquement le moyen de compression 300 et le conduit d'injection 404, en amont de la vanne d'injection 401. Notamment, ce deuxième conduit de rinçage 800 est adapté pour imposer une circulation du fluide de compression dans la vanne d'injection 401. Par ailleurs, le deuxième conduit de rinçage 800 peut également être pourvu d'un clapet anti-retour dit deuxième clapet anti-retour 801.

Le deuxième conduit de rinçage 800 peut également être pourvu d'une vanne, dite deuxième vanne de rinçage 802.

De manière particulièrement avantageuse, la connexion du deuxième conduit de rinçage 800 avec le conduit de compression 304 peut être mise en œuvre en amont de la vanne d'arrêt 301. Selon cette configuration, il est ainsi possible d'isoler le réservoir 101 avec la vanne d'arrêt 301 lors d'une phase de rinçage de la vanne d'injection 401.

L'invention n'est cependant pas limitée à cette seule configuration, et l'homme du métier cherchant à la mettre en œuvre pourra également envisager une connexion en aval de la vanne d'arrêt 301.Le premier et le deuxième conduit de rinçage permettent de rincer les vannes de remplissage et d'injection et ainsi évacuer toute matière minérale susceptible d'obstruer lesdites vannes.

Selon une variante de ce premier exemple de mise en œuvre, le réservoir 101 peut être enroulé autour d'un axe XX' pour former un hélicoïde, par exemple à spires jointives (figure 3).

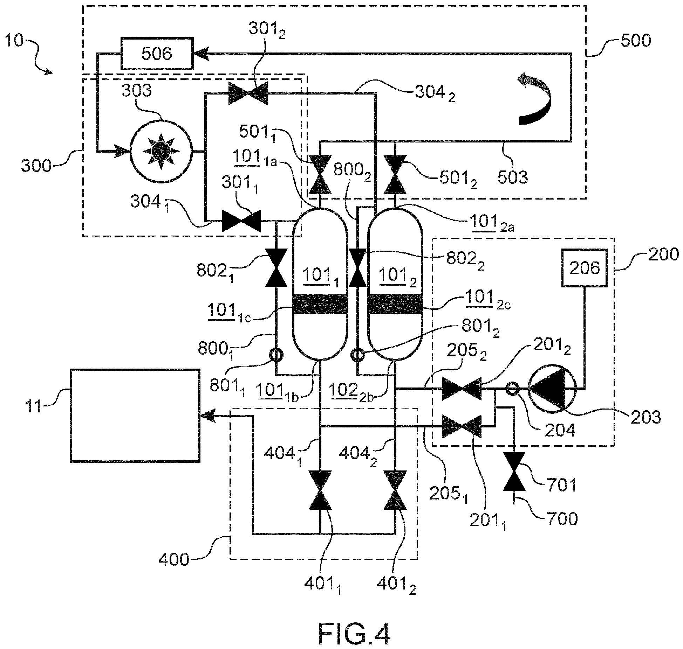

La figure 4 illustre un deuxième exemple de réalisation d'un dispositif d'injection 10 d'un effluent à haute pression dans un réacteur 11 de gazéification à haute.

Ce deuxième exemple reprend pour l'essentiel l'ensemble des caractéristiques du premier exemple de réalisation décrit ci-avant.

Dans cet exemple, l'au moins un réservoir comprend deux réservoirs dits respectivement premier réservoir 101₁ et deuxième réservoir 101₂.

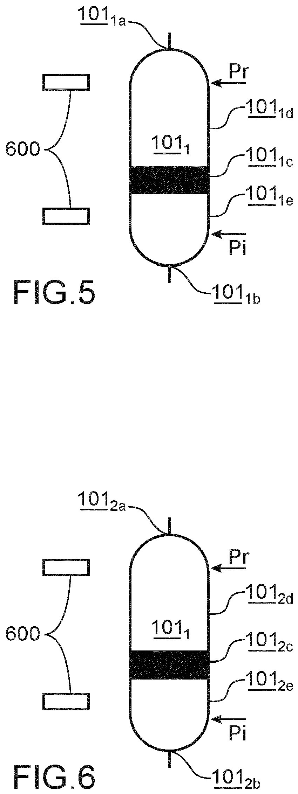

Chacun parmi le premier réservoir 101₁ (figure 5) et le deuxième réservoir 101₂ (figure 6) reprend les caractéristiques du réservoir 101 du premier exemple.

Notamment, le premier réservoir 101₁ présente une forme tubulaire et s'étend entre une extrémité haute 101₁ₐ et une extrémité basse 101_{1b}, tandis que le deuxième réservoir 101₂ présente également une forme tubulaire et s'étend entre une extrémité haute 10l₂ₐ et une extrémité basse 101_{2b}.

Le dispositif d'injection 10 selon ce deuxième exemple est également pourvu d'un premier piston mobile 101_{1c} et d'un deuxième piston mobile 101_{2c} disposés, respectivement, dans le premier réservoir 101₁ et le deuxième réservoir 101₂.

En particulier, le premier piston mobile 101_{1c} sépare le volume du premier réservoir 101₁ en deux sections dites, respectivement, section haute 101_{1d} et section basse 101₁ₑ. La section haute 101_{1d} s'étend dans le tube formant le premier réservoir 101₁ de l'extrémité haute 101₁ₐ vers le premier piston mobile 101_{1c}, tandis que la section basse 101₁ₑ s'étend du premier piston mobile 101_{1c} vers l'extrémité basse 101_{1b}. Le volume de chacune de ces deux sections est susceptible de varier lors du déplacement du premier piston mobile 101_{1c} le long du premier réservoir 101₁, par exemple sous l'effet d'une différence de pression entre l'une et l'autre de la section haute 101_{1d} et de la section basse 101₁ₑ.

De manière équivalente, le deuxième piston mobile 101_{2c} sépare le volume du deuxième réservoir 101₂ en deux sections dites, respectivement, section haute 101_{2d} et section basse 101₂ₑ. La section haute 101_{2d} s'étend dans le tube formant le deuxième réservoir 101₂ de l'extrémité haute 10l₂ₐ vers le deuxième piston mobile 101_{2c}, tandis que la section basse 101₂ₑ s'étend du deuxième piston mobile 101_{2c} vers l'extrémité basse 101_{2b}. Le volume de chacune de ces deux sections est susceptible de varier lors du déplacement du deuxième piston mobile 101_{2c} le long du deuxième réservoir 101₂, par exemple sous l'effet d'une différence de pression entre l'une et l'autre de la section haute 101_{2d} et de la section basse 101₂ₑ.

Selon ce deuxième exemple de réalisation, le moyen de remplissage 200 est agencé pour remplir en effluent sélectivement l'un et l'autre du premier 101₁ et du deuxième réservoir 101₂.

Le moyen de remplissage 200 comprend à cet égard la pompe de remplissage 203 ainsi que deux conduits de remplissage 205₁, 205₂, associés chacun à une vanne de remplissage 201₁, 201₂, destinés à injecter, sélectivement, l'effluent, respectivement, dans le premier 101₁ et le deuxième 101₂ réservoir.

Toujours selon ce deuxième exemple de réalisation, le moyen de compression 300 est agencé pour compresser sélectivement l'effluent susceptible d'être présent dans l'un et l'autre du premier 101₁ et du deuxième réservoir 101₂.

Le moyen de compression 300 comprend à cet égard la pompe de compression 303 ainsi que deux conduits de compression 304₁, 304₂ associés chacun à une vanne d'arrêt 301₁, 301₂ destinés à injecter sélectivement du fluide de compression à haute pression, respectivement, dans le premier 101₁ et le deuxième 101₂ réservoir.

Le moyen de recyclage 500 peut, selon ce deuxième exemple, être adapté pour prélever sélectivement le fluide de compression susceptible d'être présent dans l'un et l'autre du premier 101₁ et du deuxième 101₂ réservoir. À cet égard, le moyen de recyclage 500 peut comprendre deux vannes de recyclage 501₁ et 501₂ permettant de prélever le fluide de compression, respectivement, sélectivement dans le premier 101₁ et le deuxième 101₂ réservoir.

Le moyen d'injection 400 est également agencé pour injecter dans le réacteur sélectivement l'effluent susceptible d'être présent dans l'un et l'autre des deux réservoirs 101₁, 101₂, et compressé par le fluide de compression injectée.

À cet égard, le moyen d'injection 400 peut comprendre un premier conduit d'injection 404₁ et un deuxième conduit d'injection 404₂ dans lesquels l'effluent sous haute pression sortant de l'extrémité basse 101_{1b}, 101_{2b} de l'un ou l'autre du premier réservoir 101₁ et du deuxième réservoir 101₂ est acheminé vers le réacteur 11.

En d'autres termes, le premier conduit d'injection 404₁ et le deuxième conduit d'injection 404₂ relient le réacteur 11 à l'extrémité basse 101_{1b}, 101_{2b}, respectivement, du premier réservoir 101₁ et du deuxième réservoir 101₂.

Le premier conduit d'injection 404 et le deuxième conduit d'injection 405 sont également pourvus, respectivement, d'une première vanne d'injection 401₁ et d'une deuxième vanne d'injection 401₂.

Un tel agencement, impliquant le premier réservoir 101₁ et le deuxième réservoir 101₂, permet ainsi d'envisager une injection en continu sous haute pression de l'effluent dans le réacteur 11.

Le premier conduit de rinçage 700 est, selon ce deuxième exemple, agencé pour rincer l'une et l'autre des vannes de remplissage 201₁ et 201₂.

De manière équivalente, le dispositif d'injection 10 comprend également deux deuxièmes conduits de rinçage 800₁ et 800₂, agencés pour rincer les vannes d'injection 404₁ et 404₂.

En particulier, le deuxième conduit de rinçage 800₁ connecte fluidiquement le moyen de compression 300 et le conduit d'injection 404₁, en amont de la vanne d'injection 401₁. Notamment, ce deuxième conduit de rinçage 800₁ est adapté pour imposer une circulation du fluide de compression dans la vanne d'injection 401₁. Par ailleurs, le deuxième conduit de rinçage 800₁ peut également être pourvu d'un deuxième clapet anti-retour 801₁.

Le deuxième conduit de rinçage 800₁ peut également être pourvu d'une vanne, dite deuxième vanne de rinçage 802₁.

De manière particulièrement avantageuse, la connexion du deuxième conduit de rinçage 800₁ avec le conduit de compression 304₁ peut être mise en œuvre en amont de la vanne d'arrêt 301₁ (pour des raisons de lisibilité, la figure 4 représente une connexion en aval de la vanne d'arrêt 301₁). Selon cette configuration, il est ainsi possible d'isoler le premier réservoir 101₁ avec la vanne d'arrêt 301₁ lors d'une phase de rinçage de la vanne d'injection 401₁.

L'invention n'est cependant pas limitée à cette seule configuration, et l'homme du métier cherchant à la mettre en œuvre pourra également envisager une connexion en aval de la vanne d'arrêt 301₁.

De manière équivalente, l'autre deuxième conduit de rinçage 800₂ connecte fluidiquement le moyen de compression 300 et le conduit d'injection 404₂, en amont de la vanne d'injection 401₂. Notamment, ce deuxième conduit de rinçage 800₂ est adapté pour imposer une circulation du fluide de compression dans la vanne d'injection 401₂. Par ailleurs, le deuxième conduit de rinçage 800₂ peut également être pourvu d'un deuxième clapet anti-retour 801₂.

Le deuxième conduit de rinçage 800₂ peut également être pourvu d'une vanne, dite deuxième vanne de rinçage 802₂.

De manière particulièrement avantageuse, la connexion du deuxième conduit de rinçage 800₂ avec le conduit de compression 304₂ peut être mise en œuvre en amont de la vanne d'arrêt 301₂ (pour des raisons de lisibilité, la figure 4 représente une connexion en aval de la vanne d'arrêt 301₂). Selon cette configuration, il est ainsi possible d'isoler le premier réservoir 101₁ avec la vanne d'arrêt 301₂ lors d'une phase de rinçage de la vanne d'injection 401₂.

L'invention n'est cependant pas limitée à cette seule configuration, et l'homme du métier cherchant à la mettre en œuvre pourra également envisager une connexion en aval de la vanne d'arrêt 301₂.

Enfin, chacun de ces deux réservoirs 101₁ et 101₂ peut également être pourvu des moyens de détection selon les termes du premier exemple.

L'invention concerne également un procédé d'injection d'un effluent à haute pression dans le réacteur 11 mettant en œuvre le dispositif d'injection 10.

Ce procédé comprend en particulier des cycles de remplissage/injection exécutés de manière à injecter dans le réacteur, et à partir du premier réservoir 101₁ et du deuxième réservoir 101₂, l'effluent de manière essentiellement continue et à haute pression.

A cet égard, chaque cycle de remplissage/injection comprend une phase de remplissage en effluent du premier réservoir 101₁ ou du deuxième réservoir 101₂, suivie d'une phase d'injection, dans le réacteur 11, dudit effluent soumis à la haute pression imposée par le fluide de compression injectée par le moyen de compression 300.

En d'autres termes, dès lors qu'une phase de remplissage est exécutée au niveau d'un du premier et du deuxième réservoir, une phase d'injection est exécutée au niveau de l'autre du premier et du deuxième réservoir. Cet enchaînement permet d'assurer une injection continue de l'effluent dans le réacteur 11.

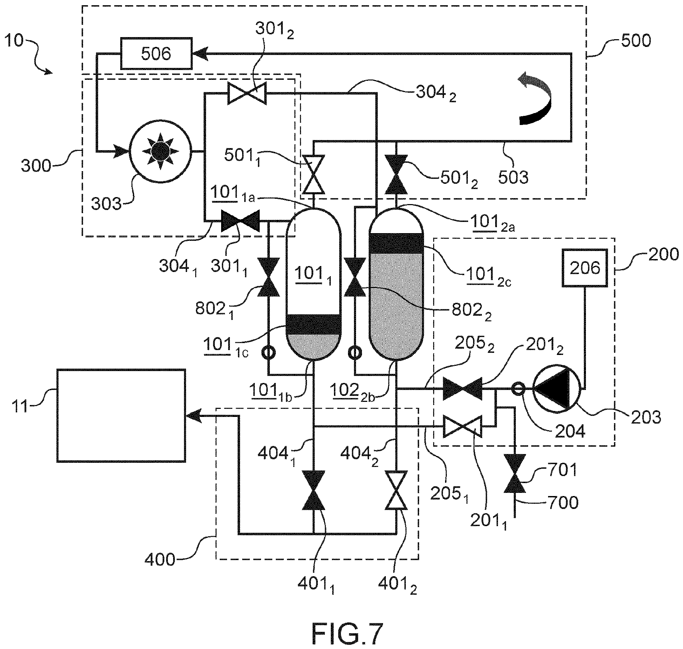

Ainsi, tel qu'illustré à la figure 7, la phase de remplissage du premier réservoir 101₁ comprend le prélèvement, par la pompe de remplissage 203, de l'effluent dans le réservoir 206. L'ouverture de la vanne de remplissage 201₁ et la fermeture de la deuxième vanne de remplissage 201₂, permet de diriger l'effluent prélevé par la pompe de remplissage 203 dans le premier réservoir 101₁. Le fluide de compression susceptible d'être présent dans le premier réservoir 101₁ est par ailleurs évacué au niveau de son extrémité haute 201₁ₐ dans le moyen de recyclage 500. Cette évacuation du fluide de compression est notamment permise par l'ouverture de la vanne de recyclage 501₁ tandis que la deuxième vanne de recyclage 501₂ reste fermée.

De manière simultanée (figure 7) à la phase de remplissage du premier réservoir 101₁, une phase d'injection est exécutée à partir du deuxième réservoir 101₂. En particulier, l'injection comprend le transfert de l'effluent présent dans le deuxième réservoir 101₂ vers le réacteur 11.

Cette phase met notamment en œuvre, le moyen de compression 300 qui injecte du fluide de compression à haute pression au niveau de l'extrémité haute 10l₂ₐ du deuxième réservoir 101₂. Lors de cette phase, la vanne de 301₂ est ouverte tandis que la vanne d'arrêt 301₁ reste fermée.

L'injection à haute pression du fluide de compression est par ailleurs exécutée au moyen de la pompe de compression 303.

Ainsi, lors de cette phase d'injection, la pression exercée par le fluide de compression injectée permet d'imposer une haute pression à l'effluent présent dans le deuxième réservoir 101₂. L'ouverture de la vanne d'injection 401₂, tant en conservant la vanne d'injection 401₁ fermée, permet à l'effluent sous haute pression de s'écouler via le deuxième conduit d'injection dans le réacteur 11.

De manière particulièrement avantageuse, le fluide de compression évacué du premier réservoir 101₁, lors de sa phase de remplissage, peut être injectée dans le deuxième réservoir 101₂. Cet aspect permet avantageusement de limiter la consommation de fluide de compression. En particulier, la recirculation du fluide de compression peut mettre en œuvre le réservoir tampon 506. Plus particulièrement, le fluide de compression prélevé dans le premier réservoir 101₁ peut avantageusement être stocké dans le réservoir tampon 506 avant d'être réinjecté dans le deuxième réservoir lors d'une phase de compression dans ledit deuxième réservoir 101₂.

A l'issue de la phase d'injection à partir du deuxième réservoir 101₂, la phase de remplissage de ce dernier est mise en œuvre, tandis que l'effluent présent dans le premier réservoir 101₁ est injecté dans le réacteur 11 lors d'une phase de d'injection.

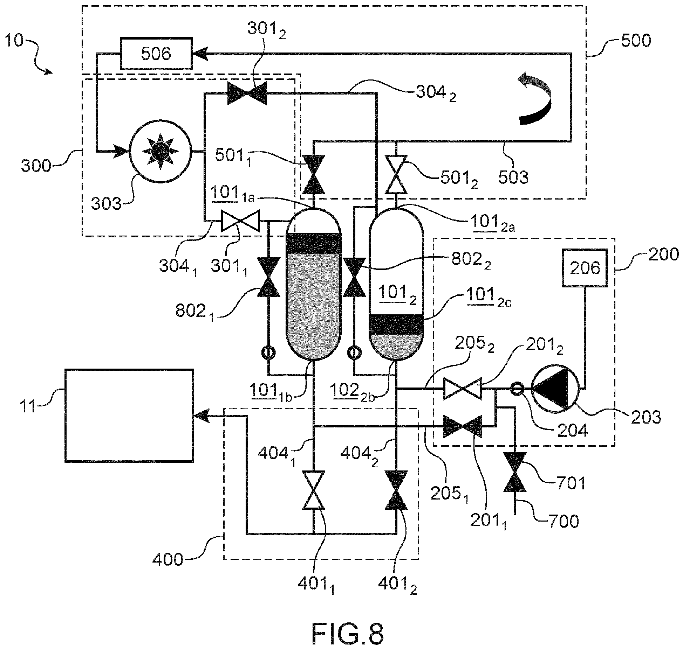

Ainsi, tel qu'illustré à la figure 8, la phase de remplissage du deuxième réservoir 101₂ comprend le prélèvement, par la pompe de remplissage 203, d'effluent dans le réservoir d'effluent 206. L'ouverture de la vanne de remplissage 201₂ et la fermeture de la vanne de remplissage 201₁, permet de diriger l'effluent prélevé par la pompe de remplissage dans le deuxième réservoir 101₂. Le fluide de compression susceptible d'être présent dans le deuxième réservoir 101₂ est par ailleurs évacué au niveau de son extrémité haute 10l₂ₐ dans le moyen de recyclage 500. Cette évacuation du fluide de compression est notamment permise par l'ouverture de la vanne de recyclage 501₂ tandis que la vanne de recyclage 501₁ reste fermée.

De manière simultanée à la phase de remplissage du deuxième réservoir 101₂, une phase d'injection est exécutée à partir du premier réservoir 101₁. En particulier, l'injection comprend le transfert de l'effluent présent dans le premier réservoir 101₁ vers le réacteur 11.

Cette phase met notamment en œuvre, le moyen de compression 300 qui injecte de l'effluent à haute pression au niveau de l'extrémité haute 101₁ₐ du premier réservoir 101₁. Lors de cette phase, la vanne d'arrêt 301₁ est ouverte tandis que la vanne d'arrêt 301₂ reste fermée.

L'injection à haute pression du fluide de compression est par ailleurs exécutée au moyen de la pompe de compression 303.

Ainsi, lors de cette phase d'injection, la pression exercée par le fluide de compression injecté permet d'imposer une haute pression l'effluent présent dans le premier réservoir 101₁. L'ouverture de la vanne d'injection 401₁, tout en conservant la vanne d'injection 401₂ fermée, permet à l'effluent sous haute pression de s'écouler via le conduit d'injection 404₁ dans le réacteur 11.

De manière particulièrement avantageuse, le fluide de compression évacué du deuxième réservoir 101₂ lors de sa phase de remplissage, peut être injectée dans le premier réservoir 101₁. Cet aspect permet avantageusement de limiter la consommation de fluide compression.

En particulier, la recirculation du fluide de compression peut mettre en œuvre le réservoir tampon 506. Plus particulièrement, le fluide de compression prélevé dans le deuxième réservoir 101₂ peut avantageusement être stocké dans le réservoir tampon 506 avant d'être réinjecté dans le premier réservoir lors d'une phase de compression dans ledit premier réservoir 101₁.

Le dispositif d'injection selon la présente invention est ainsi agencé pour éviter tout passage de matière solide dans la pompe de compression. Cette dernière est ainsi protégée de l'abrasion due au passage de la matière solide comprise dans le co-digestat.

Par ailleurs, la mise en œuvre des premier et deuxième pistons mobiles limite les interactions entre le fluide de compression et l'effluent.

Par ailleurs, les premier et deuxièmes moyens de rinçage peuvent avantageusement être mis en œuvre à l'issue des phases de remplissage et/ou d'injection de manière à évacuer la matière solide susceptible d'être coincée au niveau des vanne d'injection et/ou de remplissage.

Enfin, le dispositif d'injection limite, voire prévient, toute dilution de l'effluent dans le fluide de compression. Il en résulte ainsi un meilleur dosage de l'effluent injecté dans le réacteur.

### RÉFÉRENCES

[1] EP 2002121 B1 ;
[2] EP 0991864;
[3] EP1884656 ;
[4] KR100885902;
[5] CN105626627.

## Revendications

1. Dispositif d'injection (10) adapté pour injecter sous haute pression un effluent dans un réacteur (11), le dispositif comprenant :
- au moins un réservoir (101, 101₁, 101₂) de forme tubulaire comprenant une extrémité haute (101a, 101₁ₐ, 101₂ₐ) et une extrémité basse (101b, 101_{1b}, 101_{2b}), et pourvu d'un piston mobile (101c, 101_{1c}, 101_{2c}) entre les extrémités haute (101a, 101₁ₐ, 101₂ₐ) et basse (101b, 101_{1b}, 101_{2b}), et séparant le volume de l'au moins un réservoir (101, 101₁, 101₂) en deux sections de volume variable ;
- un moyen de remplissage (200) agencé pour remplir en effluent l'au moins un réservoir (101, 101₁, 101₂) par son extrémité basse (101b, 101_{1b}, 101_{2b}) ;
- un moyen de compression (300) agencé pour injecter, sous pression, un fluide, dit fluide de compression, dans l'au moins un réservoir (101, 101₁, 101₂) par son extrémité haute (101a, 101₁ₐ, 101₂ₐ) et de manière à compresser, par l'intermédiaire du piston mobile (101c, 101_{1c}, 101_{2c}), l'effluent susceptible d'être présent dans l'au moins un réservoir (101, 101₁, 101₂) ;
- un moyen d'injection (400), dans le réacteur (11), de l'effluent susceptible d'être présent dans l'au moins un réservoir (101, 101₁, 101₂), et compressé par le fluide de compression.

2. Dispositif selon la revendication 1, dans lequel la forme du piston mobile (101c, 101_{1c}, 101_{2c}) comprend une section de forme cylindrique d'une longueur au moins deux fois supérieure à son diamètre.

3. Dispositif selon la revendication 1 ou 2, dans lequel ledit dispositif d'injection comprend des moyens de détection (600) de fin de remplissage et/ou de fin d'injection de l'effluent.

4. Dispositif selon la revendication 3, dans lequel les moyens de détection (600) sont adaptés pour détecter la présence du piston mobile (101c, 101_{1c}, 101_{2c}) en deux positions de détection de l'au moins un réservoir (101, 101₁, 101₂), lesdites positions étant associées à, respectivement, une fin de remplissage et une fin d'injection de l'effluent, par exemple le piston mobile (101c, 101_{1c}, 101_{2c}) présentant une aimantation permanente adaptée à sa détection en l'une ou l'autre des deux positions de détection (Pr, Pi).

5. Dispositif selon l'une des revendications 1 à 4, dans lequel le moyen de remplissage (200) comprend une pompe de remplissage (203) et un conduit de remplissage (205, 205₁, 205₂), associé à une vanne de remplissage (201, 201₁, 201₂), et propre à l'au moins un réservoir (101, 101₁, 101₂) considéré, ledit dispositif pouvant comprendre en outre un premier conduit de rinçage (700) en amont de la vanne de remplissage (201, 201₁, 201₂), et agencé pour imposer une circulation d'un fluide de rinçage, notamment de l'eau, dans la vanne de remplissage (201, 201₁, 201₂).

6. Dispositif selon l'une des revendications 1 à 5, dans lequel le moyen d'injection (400) comprend un conduit d'injection (400, 400₁, 400₂), associé à une vanne d'injection (401, 401₁, 401₂), destinée à relier fluidiquement l'extrémité basse (101b, 101_{1b}, 101_{2b}) au réacteur (11).

7. Dispositif selon la revendication 6, dans lequel ledit dispositif comprend en outre un deuxième conduit de rinçage (800, 800₁, 800₂), connectant fluidiquement le moyen de compression (300) et le conduit d'injection (400, 400₁, 400₂), en amont de la vanne d'injection (401, 401₁, 401₂), et agencé pour imposer une circulation du fluide de compression dans la vanne d'injection (401, 401₁, 401₂).

8. Dispositif selon l'une des revendications 1 à 7, dans lequel le moyen de compression (300) comprend une pompe de compression (303) et un conduit de compression (304, 304₁, 304₂), associé à une vanne d'arrêt (301, 301₁, 301₂), et propre à l'au moins un réservoir (101, 101₁, 101₂) considéré.

9. Dispositif selon l'une des revendications 1 à 8, dans lequel ledit dispositif comprend en outre un moyen de recyclage (500) du fluide de compression injectée sous pression dans l'au moins un réservoir (101, 101₁, 101₂), et pourvu d'un conduit de recyclage (503) destiné à prélever ledit fluide de compression au niveau de l'extrémité haute (101a, 101₁ₐ, 101₂ₐ) de l'au moins un réservoir (101, 101₁, 101₂), le le conduit de recyclage étant par exemple agencé pour imposer une recirculation du fluide de compression dans le moyen de compression (300)..

10. Dispositif selon la revendication 9, dans lequel le moyen de recyclage (500) comprend une vanne de recyclage (501, 501₁, 501₂) permettant de prélever le fluide de compression sélectivement dans l'au moins un réservoir (101, 101₁, 101₂), et le stocker dans un réservoir tampon (506).

11. Dispositif selon la revendication 10, dans lequel le moyen de compression (300) est agencé pour prélever le fluide de compression stocké dans le réservoir tampon (506) en vue de l'injecter sous pression dans l'au moins un réservoir (101, 101₁, 101₂).

12. Dispositif selon l'une des revendications 1 à 11, dans lequel l'au moins un réservoir (101, 101₁, 101₂) forme un tube de longueur L et de diamètre D, et de sorte que le rapport de la longueur L sur le diamètre D est supérieur à 30, D étant par exemple inférieur à 500 mm ou inférieur à 250 mm.

13. Dispositif selon l'une des revendications 1 à 11, dans lequel l'au moins un réservoir (101, 101₁, 101₂) forme un hélicoïde, avantageusement à spires jointives.

14. Dispositif selon l'une des revendications 1 à 13, dans lequel l'au moins un réservoir (101, 101₁, 101₂) comprend deux réservoirs (101₁, 101₂), le moyen de remplissage (200) est agencé pour remplir en effluent sélectivement l'un et l'autre des deux réservoirs (101₁, 101₂), le moyen de compression (300) est agencé pour compresser sélectivement l'effluent susceptible d'être présent dans l'un et l'autre des deux réservoirs (101₁, 101₂), et le moyen d'injection (400) est agencé pour injecter dans le réacteur (11) sélectivement l'effluent susceptible d'être présent dans l'un et l'autre des deux réservoirs (101₁, 101₂), et compressé par le fluide de compression injectée.

15. Installation de conversion d'un effluent comprenant de la matière organique qui comprend :
- un réacteur (11) de conversion de l'effluent, par exemple au moins un réacteur choisi parmi : un réacteur de gazéification en eau supercritique, un réacteur de liquéfaction hydrothermale, un réacteur de carbonisation hydrothermale ;
- un dispositif d'injection (10) selon l'une des revendications 1 à 14.
